(19) Europäisches Patentamt
European Patent Office
Office européen des brevets

(11) EP 2 730 760 A1

(12) EUROPEAN PATENT APPLICATION

(43) Date of publication:
14.05.2014 Bulletin 2014/20

(51) Int Cl.:
F01N 3/021 (2006.01)

(21) Application number: 13191811.2

(22) Date of filing: 06.11.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 07.11.2012 JP 2012245199

(71) Applicant: IBIDEN CO., LTD.
Ogaki-shi, Gifu 503-8604 (JP)

(72) Inventors:
• Kumano, Keiji
  Aichi, 444-1301 (JP)
• Okabe, Takahiko
  Aichi, 444-1301 (JP)

(74) Representative: Louis Pöhlau Lohrentz
Patentanwälte
Postfach 30 55
90014 Nürnberg (DE)

(54) **Holding seal material, method of manufacturing holding seal material, and exhaust gas purifying device**

(57)    [Task] A holding seal material is provided in which affixing of allowing at least a portion of the surface of a fiber not to be covered with an organic binder is performed, whereby fiber scattering at the time of work of assembling an exhaust gas purifying device is suppressed and a stable catalyst carrier holding force is obtained.

[Means for Resolution] A holding seal material made of inorganic fibers is provided which is manufactured through a process of bringing an inorganic binder that includes inorganic particles and water into contact with a mat made of inorganic fibers, a drying process of drying the mat, a process of bringing an organic binder into contact with the mat, and a drying process of drying the mat and thus contains the organic binder and in which the organic binder is stuck to the surface of the inorganic fiber in a plurality of island forms.

FIG. 2A

EP 2 730 760 A1

## FIG. 2B

## FIG. 2C

## FIG. 2D

**Description**

[Technical Field]

The present invention relates to a holding seal material, a method of manufacturing the holding seal material, and an exhaust gas purifying device.

[Background Art]

Particulate matter (hereinafter also referred to as "PM") is included in exhaust gas which is discharged from an internal combustion engine such as a diesel engine, and in recent years, the PM being harmful to the environment or the human body has become problematic. Further, since harmful gas components such as CO, HC, or NOx are also included in the exhaust gas, the influence of these harmful gas components on the environment or the human body is also of a concern.

Therefore, as an exhaust gas purifying device which collects the PM in the exhaust gas or purifies the harmful gas components, various exhaust gas purifying devices, each of which is configured to include an exhaust gas treating body made of a porous ceramics such as silicon carbide or cordierite, a casing which accommodates the exhaust gas treating body, and a holding seal material which is disposed between the exhaust gas treating body and the casing, have been proposed. The holding seal material is disposed with the main aim of preventing the exhaust gas treating body from being damaged by coming into contact with the casing that covers the outer periphery thereof, due to vibration or impact that is caused by the running or the like of an automobile, preventing the exhaust gas from leaking from between the exhaust gas treating body and the casing, or the like.

Since the holding seal material is a filamentous body and has light specific gravity, when fabricating a catalytic converter by assembling the holding seal material to a catalyst carrier or a shell, there is a concern that inorganic fibers may scatter from the surface of the holding seal material into the air. For this reason, there is the possibility of contaminating the working environment of a workplace where assembling work is performed, and thus it is necessary for a worker to wear a dust mask or the like in order to perform the work.

With respect to fiber scattering reduction, a holding seal material in which an organic binder having a glass transition temperature (Tg) of less than or equal to 5°C is used in a mat-like material which is formed by disposing inorganic fibers in a mat form and a method of manufacturing the holding seal material are proposed (refer to Patent Document 1).

[Related Art Document]

[Patent Document]

[Patent Document 1] JP-A-2006-342774

[Disclosure of the Invention]

[Problem that the Invention is to Solve]

In the technique described in Patent Document 1, as the organic binder, an organic binder having a low glass transition temperature (Tg) of less than or equal to 5°C is used. For this reason, the organic binder stuck to the holding seal material can show a rubber state having high mobility at normal temperature (for example, temperature greater than or equal to the glass transition point of the organic binder). Therefore, when assembling the holding seal material to the catalyst carrier and the shell, the organic binder joins the inorganic fibers of the mat-like material together, shows excellent extensibility, and can absorb damage such as impact which is applied to the holding seal material. For this reason, it is possible to suppress breakage of the inorganic fibers of the holding seal material and thus suppress scattering of the inorganic fibers from the holding seal material.

Therefore, even if a worker does not wear a dust mask or the like, the worker can comfortably perform work, and it is possible to maintain a good working environment of a workplace where assembling work is performed. However, in a case where a catalyst holding seal material in which an organic binder is stuck to fibers is heated by high-temperature exhaust gas which is discharged from an engine, there is a concern of a reduction in the force of holding a catalyst carrier. This is because when the organic binder stuck to the holding seal material is thermally decomposed and fluidized by high heat, the thermally decomposed organic binder is interposed in the interface of an intersection of the fibers configuring the holding seal material, and therefore, a frictional force between the fibers is reduced. As a result, shift easily occurs in a fiber intersection portion in a direction to relieve stress acting on a fiber intersection, and thus there is a concern that a reduction in the surface pressure of the holding seal material may be caused.

The present invention has been made in view of the above problem and has an object to provide a holding seal material made of inorganic fibers and containing an organic binder, in which the organic binder is stuck to the surface of the inorganic fiber in a plurality of island forms and which can stably hold a catalyst carrier by suppressing a reduction in the force of holding the catalyst carrier even in a case of being heated by high-temperature exhaust gas which is discharged from an engine, while suppressing scattering of the inorganic fibers, and an exhaust gas purifying device in which the catalyst carrier can be stably held.

[Means for solving the problem]

The holding seal material according to Claim 1 is a holding seal material that is a catalyst holding seal material made of inorganic fibers and contains an organic binder, characterized in that at least a portion of the surface of the fiber is not covered with the organic binder and the organic binder has a portion stuck to the surface of at least one inorganic fiber in an island form. The holding seal material is characterized in that an organic binder is stuck to the surface of an inorganic fiber configuring the holding seal material in an island form and a portion where the organic binder is stuck and a portion where the organic binder is not stuck are observed on the surfaces of the inorganic fibers. In this manner, the portion where the organic binder is stuck suppresses breakage of the inorganic fibers, thereby being able to suppress scattering of the inorganic fibers. On the other hand, at the portion where the organic binder is not stuck, at the time of thermal decomposition and fluidization due to high heat of exhaust gas, a thermally decomposed organic binder is not interposed in the interface of an intersection of the fibers configuring the holding seal material, and therefore, a frictional force between the fibers is not reduced.

In particular, an island-like sticking state of the organic binder to the surface of the inorganic fiber shows that the organic binder independently exists on the fiber surface as the surface of the inorganic fiber is likened to the surface of the sea and the organic binder sticking surface is likened to an island. In a sticking state of the organic binder which is stuck to the inorganic fiber, the organic binder is stuck to the surface of the inorganic fiber in a state of being dotted and stuck. In a case where the surface of the fiber is viewed at an observation image of a scanning electron microscope (SEM), the shape of the organic binder stuck to the surface of the inorganic fiber is, for example, a substantially circular shape or an elliptical shape. However, the shape need not be limited thereto. Due to such a sticking state of the organic binder, it is possible to increase a portion where the organic binder is not interposed in a fiber intersection portion and a frictional force between the fibers is not reduced. Further, a holding seal material can be obtained in which it is possible to stably hold a catalyst carrier by suppressing a reduction in the force of holding the catalyst carrier even in a case of being heated by a high-temperature exhaust gas which is discharged from an engine, while suppressing fiber scattering when assembling the holding seal material.

The holding seal material according to Claim 2 is a holding seal material characterized in that the organic binder is stuck at a ratio in a range of 10% to 80%, further preferably, a ratio in a range of 13% to 50% with respect to the area of the surface of the inorganic fiber. In a sticking state of the organic binder which is stuck to the inorganic fiber, the number of places where the organic binder is interposed in a fiber intersection portion changes according to the area of the organic binder which is stuck to the surface of the inorganic fiber. For this reason, in a case where the organic binder sticking area is less than 10% with respect to the area of the surface of the inorganic fiber, the number of intersections where the organic binder is interposed in a fiber intersection portion is small, the influence of the organic binder becomes small even at high temperature due to exhaust gas, and the sum of frictional forces between the fibers is maintained to a large extent, and therefore, a state where surface pressure is high is created. Further, in fiber scattering properties, an impact absorption effect by sticking of the organic binder is reduced, thereby leading to an increase in the amount of scattered fibers. On the other hand, in a case where the organic binder sticking area exceeds 80% with respect to the area of the surface of the inorganic fiber, the number of intersections where the organic binder is interposed in a fiber intersection portion is large, the influence of the organic binder becomes large at high temperature due to exhaust gas, and the sum of frictional forces between the fibers becomes small, thereby leading to an decrease in surface pressure. Further, in fiber scattering properties, an impact absorption effect by sticking of the organic binder is large and the amount of scattered fibers can be suppressed. Therefore, in order for high surface pressure to be able to be maintained and for the amount of scattered fibers to be able to be satisfied, it is preferable that the organic binder be stuck at a ratio in a range of 10% to 80% with respect to the area of the surface of the inorganic fiber, and further preferably, it is preferable that the organic binder be stuck at a ratio in a range of 13% to 50%.

The holding seal material according to Claim 3 is a holding seal material characterized in that a sticking rate of the organic binder is stuck in a range of 0.1 wt% to 1.5 wt%, further preferably, a range of 0.2 wt% to 0.8 wt% with respect to the weight of the inorganic fiber. In a case where the sticking rate of the organic binder is less than 0.1 wt%, the effect of suppressing the amount of scattered fibers becomes small. On the other hand, in a case where the sticking rate of the organic binder exceeds 1.5 wt%, it becomes difficult to form a sticking state of not being covered with the organic binder on the surface of the inorganic fiber and the organic binder is always interposed in the fiber intersection portion, and therefore, a frictional force between the fibers is reduced, and thus mat surface pressure is reduced.

The holding seal material according to Claim 4 is a holding seal material characterized in that glass transition temperature (Tg) of polymer resin configuring the organic binder is less than or equal to -21°C and an average particle diameter of the polymer resin dispersed in water as emulsion that is a material form before the organic binder is stuck to an inorganic fiber mat is greater than or equal to 320 nm. The organic binder stuck to the holding seal material, in which the glass transition temperature of the organic binder is less than or equal to -21°C, can show a rubber state having high mobility at normal temperature. Therefore, when assembling the holding seal material to the catalyst carrier and a shell, the organic binder joins the inorganic fibers of a mat-like material together, shows excellent extensibility, and can absorb damage such as impact which is applied to the holding seal material. Further, the glass transition temperature is very low, whereby it is possible to reduce an affixing rate of the organic binder to a fiber scattering amount suppression level of the minimum necessary, that is, to a range of 0.1 wt% to 1.0 wt% with respect to fiber weight. Then, as the organic binder which easily forms a portion where the organic binder is stuck and a portion where the organic binder is not stuck, on the surface of the inorganic fiber, emulsion in which polymer resin is dispersed in water as a material form before sticking to an inorganic fiber mat is preferable, and it is preferable to use an organic binder in which the average particle diameter of polymer resin is greater than or equal to 320 nm.

The holding seal material according to Claim 5 is a holding seal material characterized in that it is made of inorganic fibers which are inorganic fibers obtained by a precursor method and are obtained by carrying out a needle punching treatment on the precursor and then performing firing. The fibers are entangled with each other by performing the needle punching treatment, and thus the tensile strength of the holding seal material is moderately increased and necessary strength to prevent breakage when wrapping the holding seal material around a catalyst carrier is given, and it is possible to moderately reduce bulk. As a result, it is possible to increase the work efficiency in canning. Further, the surface pressure of the holding seal material can be increased due to entanglement of the inorganic fibers.

In the holding seal material according to Claim 6, as the inorganic fiber, it is not particularly limited, and it is preferable that the inorganic fiber be at least one type of inorganic fiber which is selected from the group consisting of an alumina fiber, an alumina silica fiber, a silica fiber, a bio-soluble fiber, and a glass fiber. It is preferable to change and apply the inorganic fiber according to characteristics or the like required for the holding seal material, such as heat resistance or wind erosion resistance.

The holding seal material according to Claim 7 is a holding seal material characterized in that the inorganic fiber is a mixture of alumina and silica. In particular, a low-crystalline alumina inorganic fiber is preferable, and a low-crystalline alumina inorganic fiber having a mullite composition is preferable.

The holding seal material according to Claim 8 is a holding seal material characterized in that inorganic particles are stuck to the surface of the inorganic fiber. As the inorganic particle, alumina or silica is preferable. Alumina is stuck to the inorganic fiber as a so-called inorganic binder. In addition, as a form which is used in a process of sticking an inorganic binder to the holding seal material, it is preferable that the form be a colloidal solution in which inorganic particles are dispersed in water. Then, the inorganic binder applied to the inorganic fiber becomes alumina due to evaporation and removal of moisture by drying, thereby being solidly stuck to the surface of the inorganic fiber and solidly bonding some inorganic fibers together. On the other hand, in a case of using silica sol, it is preferable to use cationic silica sol. In addition to the organic binder, such inorganic particles are stuck to the inorganic fiber, whereby it is possible to increase a frictional force of a fiber intersection portion and it is possible to further increase the surface pressure of the holding seal material.

The holding seal material according to Claim 9 is a holding seal material characterized in that inorganic particles are stuck to the surface of the inorganic fiber and an organic binder is stuck to the surfaces of the inorganic particles. As the inorganic particle, alumina or silica is preferable. Alumina is stuck to the inorganic fiber as a so-called inorganic binder. In addition, as a form which is used in a process of sticking an inorganic binder to the holding seal material, it is preferable that the form be a colloidal solution in which inorganic particles are dispersed in water. Then, the inorganic binder applied to the inorganic fiber becomes alumina due to evaporation and removal of moisture by drying, thereby being solidly stuck to the surface of the inorganic fiber and solidly bonding some inorganic fibers together. On the other hand, in a case of using silica sol, it is preferable to use cationic silica sol. The holding seal material is characterized in that inorganic particles are stuck to the surface of the inorganic fiber and an organic binder is stuck to the surfaces thereof.

The exhaust gas purifying device according to Claim 10 is characterized in that it includes an exhaust gas treating body, a metal casing which accommodates the exhaust gas treating body, and a holding seal material which is disposed between the exhaust gas treating body and the metal casing and holds the exhaust gas treating body and the holding seal material is the holding seal material according to the invention. At the time of work when wrapping the holding seal material having such a configuration around the exhaust gas treating body, the amount of scattered fibers can be suppressed, and if an exhaust gas purifying device is made by making the exhaust gas treating body around which the holding seal material is wrapped be accommodated in the casing, an exhaust gas purifying device is obtained in which a holding force on the casing side is high and heat resistance and ease of bending on the exhaust gas treating body side are excellent.

A method of manufacturing a holding seal material according to Claim 9 is a method of manufacturing a holding seal material including: a process of bringing an inorganic binder which includes inorganic particles and water into contact with the mat made of inorganic fibers; a drying process of drying the mat, a process of bringing an organic binder into contact with the mat; and a drying process of drying the mat. It is possible to manufacture a holding seal material characterized in that inorganic particles are stuck to the surface of an inorganic fiber and an organic binder is stuck to the surfaces of the inorganic particles.

[Brief Description of the Drawings]

[Fig. 1] Fig. 1 is a perspective view schematically showing a holding seal material according to an embodiment of the invention.
[Fig. 2A] Fig. 2A is an SEM image in which an organic binder is stuck to the surface of an inorganic fiber in an island form.
[Fig. 2B] Fig. 2B is an SEM image in which an organic binder is stuck to the surface of an inorganic fiber in an island form.
[Fig. 2C] Fig. 2C is an SEM image in which an organic binder is stuck to the surface of an inorganic fiber in an island form.
[Fig. 2D] Fig. 2D is an SEM image in which an organic binder is stuck to the surface of an inorganic fiber in an island form.
[Fig. 3] Fig. 3 is an SEM image in which an inorganic binder is stuck to the surface of an inorganic fiber and an organic binder is stuck to the surface of the inorganic fiber in an island form.
[Fig. 4] Fig. 4 is a diagram showing a manufacturing process of a holding seal material with an organic binder stuck thereto.
[Fig. 5] Fig. 5 is a diagram showing a manufacturing process of a holding seal material with an inorganic binder and an organic binder stuck thereto.
[Fig. 6] Fig. 6 is a cross-sectional view schematically showing an example of an exhaust gas purifying device.
[Fig. 7] Fig. 7 is a perspective view schematically showing an example of an exhaust gas treating body configuring the exhaust gas purifying device.
[Fig. 8] Fig. 8 is a perspective view schematically showing an example of a method of manufacturing the exhaust gas purifying device.
[Fig. 9] Fig. 9 is a diagram schematically showing a fiber scattering tester.

[Best Mode for Carrying Out the Invention]

(Embodiments)

Hereinafter, an embodiment of each of a holding seal material, a method of manufacturing the holding seal material, and an exhaust gas purifying device according to the invention will be described.

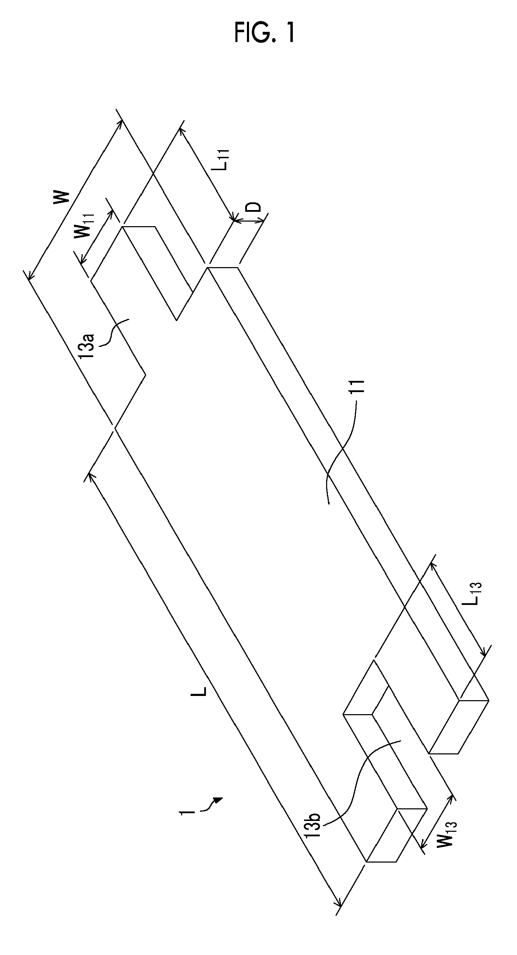

Fig. 1 is a perspective view schematically showing a holding seal material according to a first embodiment of the invention. A holding seal material 1 according to this embodiment is a mat having a substantially rectangular shape in a plan view and having a predetermined length (hereinafter shown by an arrow L in Fig. 1) in a longitudinal direction, a predetermined width (shown by an arrow W in Fig. 1), and a predetermined thickness (shown by an arrow D in Fig. 1). Further, the holding seal material 1 has a first principal surface 11, and a second principal surface 12 that is a principal surface on the side opposite to the first principal surface 11.
In the holding seal material 1 shown in Fig. 1, a convex portion 13a is formed at an end portion on one side of the end portions on the length direction side of the holding seal material 1, and a concave portion 13b is formed at an end portion on the other side. The convex portion 13a and the concave portion 13b of the holding seal material 1 have shapes which fit to each other when the holding seal material 1 is wrapped around an exhaust gas treating body in order to assemble an exhaust gas purifying device (described later).
The holding seal material 1 has a predetermined thickness D. The direction of the thickness D of the holding seal material is a direction perpendicular to the first principal surface 11 and the second principal surface 12.
The holding seal material 1 according to this embodiment contains an organic binder. As an inorganic fiber, it is not particularly limited, and it is preferable that the inorganic fiber be at least one type of inorganic fiber which is selected from the group consisting of an alumina fiber, an alumina silica fiber, a silica fiber, a bio-soluble fiber, and a glass fiber. It is preferable to change the inorganic fiber according to the characteristics which is required for the holding seal material, such as heat resistance or wind erosion resistance. Among them, an alumina inorganic fiber is preferable

and a low-crystalline alumina inorganic fiber having a mullite composition is more preferable.

For example, an additive such as CaO, MgO, $ZrO_2$, other than alumina and silica may be included in the alumina fiber or the alumina silica fiber. As a composition ratio of the alumina silica fiber, it is preferable that the composition ratio of $Al_2O_3$:$SiO_2$ is 60:40 to 80:20 at a ratio by weight and it is more preferable that the composition ratio be $Al_2O_3$:$SiO_2$=70:30 to 74:26.

For example, an additive such as CaO, MgO, $ZrO_2$, other than silica may be included in the silica fiber. The bio-soluble fiber is, for example, an inorganic fiber which includes at least one type of compound which is selected from the group consisting of an alkali metal compound, an alkaline earth metal compound, and a boron compound, in addition to silica or the like.

Even if the bio-soluble fiber made of these compounds is incorporated into the human body, the bio-soluble fiber is easily dissolved, and therefore, a mat which is made to include these inorganic fibers is exceptionally safe for the human body.

As a specific composition of the bio-soluble fiber, a composition can be provided in which silica is included in a range of 60 wt% to 85 wt% and at least one type of compound which is selected from the group consisting of an alkali metal compound, an alkaline earth metal compound, and a boron compound is included in a range of 15 wt% to 40 wt%. The silica refers to SiO or $SiO_2$.

As the alkali metal compound, for example, an oxide of Na or K, or the like can be given, and as the alkaline earth metal compound, an oxide of Mg, Ca, or Ba, or the like can be given. As the boron compound, an oxide of B, or the like can be given.

The holding seal material 1 according to this embodiment is a holding seal material being a catalyst holding seal material made of inorganic fibers and containing an organic binder, characterized in that at least a portion of the surface of the fiber is not covered with the organic binder and the organic binder has a portion stuck to the surface of at least one inorganic fiber in an island form. The holding seal material is characterized in that the organic binder is stuck to the surface of the inorganic fiber configuring the holding seal material, in an island form, and a portion where the organic binder is stuck and a portion where the organic binder is not stuck are observed in the surface of the inorganic fiber. In this manner, the portion where the organic binder is stuck can suppress breakage of the inorganic fiber, thereby suppressing scattering of the inorganic fiber. On the other hand, at the portion where the organic binder is not stuck, at the time of thermal decomposition and fluidization due to high heat of exhaust gas, a thermally decomposed organic binder is not interposed in the interface of an intersection of the fibers configuring the holding seal material, and therefore, a frictional force between the fibers is not reduced.

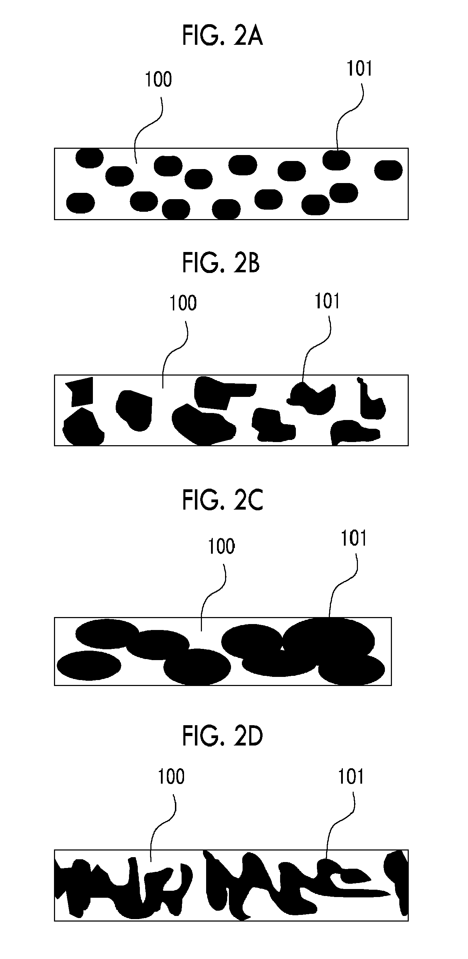

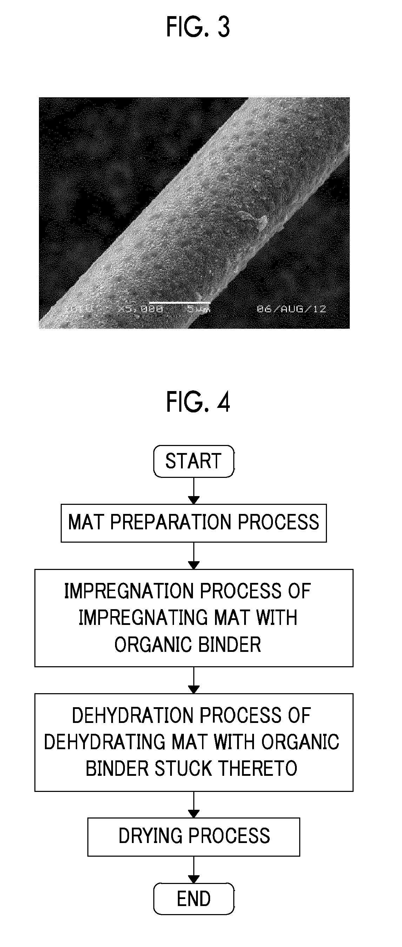

In particular, an island-like sticking state of the organic binder to the surface of the inorganic fiber shows that the organic binder independently exists on the surface of the fiber as the surface of the inorganic fiber is likened to the surface of the sea and an organic binder sticking surface is likened to an island. In the sticking state of the organic binder which is stuck to the inorganic fiber, the organic binder is stuck to the surface of the inorganic fiber in a state of being dotted and stuck. In a case of viewing the surface of the fiber in an observation image of a scanning electron microscope (SEM), the shape of the organic binder stuck to the surface of the inorganic fiber is, for example, a substantially circular shape or an elliptical shape. However, the shape need not be limited thereto. Figs. 2A to 2D show image diagrams in which an organic binder 101 is stuck to the surface of an inorganic fiber 100 in an island form. However, it is not necessarily limited to a specific sticking shape. A very small amount of organic binder may be stuck to the fiber surface other than the portion where the organic binder 101 is stuck to the surface of an inorganic fiber 100, and a state that can be observed as a state where an organic binder is dotted and stuck to the surface of an inorganic fiber in an observation image of the scanning electron microscope (SEM) is set to be a criterion. Fig. 3 shows a case of an SEM image in which an inorganic binder is stuck to the surface of the inorganic fiber and an organic binder is stuck to the surface of the inorganic fiber in an island form. Due to such a sticking state of the organic binder, it is possible to increase the portion where the organic binder is not interposed in a fiber intersection portion, and a frictional force between the fibers is not reduced. Further, a holding seal material can be made which can stably hold a catalyst carrier by suppressing a decrease in the force of holding the catalyst carrier even in a case of being heated by high-temperature exhaust gas which is discharged from an engine, while suppressing fiber scattering when assembling the holding seal material.

As the organic binder, it is not limited to specific polymer resin. Epoxy resin, acrylate resin, rubber-based resin, styrene resin, silicone resin, acrylic resin, polyester resin, polyurethane resin, or the like can be used. For example, emulsion prepared by dispersing acrylate-based latex, rubber-based latex, or the like in water can be used.

It is preferable that the organic binder stuck to the holding seal material be stuck at a ratio in a range of 10% to 80%, further preferably, a ratio in a range of 13% to 50% with respect to the area of the surface of the inorganic fiber. In the sticking state of the organic binder which is stuck to the inorganic fiber, the number of places where the organic binder is interposed in a fiber intersection portion changes according to the area of the organic binder which is stuck to the surface of the inorganic fiber. For this reason, in a case where the sticking area of the organic binder is less than 10% with respect to the area of the surface of the inorganic fiber, the number of intersections where the organic binder is interposed in a fiber intersection portion is small, the influence of the organic binder becomes small even at high temperature due to exhaust gas, and the sum of frictional forces between the fibers is maintained large, and therefore, a state where surface pressure is high is created. Further, in fiber scattering properties, an impact absorption effect by sticking of the organic binder is reduced, thereby leading to an increase in the amount of scattered fibers. On the other hand, in a case where the sticking area of the organic binder exceeds 80% with respect to the area of the surface of the inorganic fiber, the number of intersections where the organic binder is interposed in a fiber intersection portion is large, the influence of the organic binder becomes large at high temperature due to exhaust gas, and the sum of frictional forces between the fibers becomes small, thereby leading to an decrease in surface pressure. Further, in the fiber scattering properties, an impact absorption effect by sticking of the organic binder is large and the amount of scattered fibers is suppressed. Therefore, in order for high surface pressure to be able to be maintained and for the amount of scattered fibers to be able to be satisfied, it is preferable that the organic binder be stuck at a ratio in a range of 10% to 80% with respect to the area of the surface of the inorganic fiber, and further preferably, it is preferable that the organic binder be stuck at a ratio in a range of 13% to 50%.

A sticking rate of the organic binder stuck to the holding seal material is in a range of 0.1 wt% to 1.5 wt% with respect to the weight of the inorganic fiber, and further preferably, it is preferable that the organic binder be stuck in a range of 0.2 wt% to 0.8 wt%. In a case where the sticking rate of the organic binder is less than 0.1 wt%, the effect of suppressing the amount of scattered fibers becomes small. On the other hand, in a case where the sticking rate of the organic binder exceeds 1.5 wt%, it becomes difficult to form a sticking state of not being covered with the organic binder on the surface of the inorganic fiber and the organic binder is always interposed in the fiber intersection portion, and therefore, a frictional force between the fibers is reduced, and thus mat surface pressure is reduced.

It is preferable that the glass transition temperature (Tg) of polymer resin configuring the organic binder stuck to the holding seal material be less than or equal to -21°C and the average particle diameter of polymer resin dispersed in water as emulsion that is a material form before the organic binder is stuck to an inorganic fiber mat be greater than or equal to 320 nm. The organic binder stuck to the holding seal material, in which the glass transition temperature of the organic binder is less than or equal to -21°C, can show a rubber state having high mobility at normal temperature. Therefore, when assembling the holding seal material to the catalyst carrier and a shell, the organic binder joins the inorganic fibers of a mat-like material together, shows excellent extensibility, and can absorb damage such as impact which is applied to the holding seal material. Further, the glass transition temperature is very low, whereby it is possible to reduce an affixing rate of the organic binder to a fiber scattering amount suppression level of the minimum necessary, that is, to a range of 0.1 wt% to 1.5 wt% with respect to fiber weight. Then, as the organic binder which easily forms the portion where the organic binder is stuck and the portion where the organic binder is not stuck, on the surface of the inorganic fiber, emulsion dispersed in water as a material form before sticking to an inorganic fiber mat is preferable, and it is preferable to use an organic binder in which the average particle diameter of polymer resin solid is greater than or equal to 320 nm. The average particle diameter of the polymer resin in the emulsion is measured by a light scattering diffraction particle size measurement device.

The observation of the island-like sticking state and the sticking rate of the organic binder to the surface of the inorganic fiber can be determined from the shape of the organic binder stuck to the surface of the inorganic fiber in a case of viewing the surface of the fiber in an observation image of the scanning electron microscope (SEM) and the area ratio of the organic binder accounting for the fiber surface. First, five arbitrary fibers are collected from each of three arbitrary places, an upper layer, a middle layer, and a lower layer obtained by dividing the thickness D into three layers, toward the back surface from the principal surface 11 of the holding seal material 1 shown in Fig. 1. The five fibers collected with respect to each layer for a total of 15 fibers, are confirmed in an observation image by the scanning electron microscope (SEM). Magnification at which one fiber is included in the observation image is set, and the sticking shape of the organic binder of each fiber surface is observed. As the identification of the organic binder, when the surface of the inorganic fiber after a mat is heated in an electric furnace for one hour at 600°C is confirmed from the observation image of the scanning electron microscope (SEM), stuck matter of the organic binder is determined by the disappearance of a trace of the sticking shape which is deemed as an organic binder from the fiber surface. Further, with respect to the sticking area of the organic binder on the surface of the inorganic fiber, the average value of the organic binder sticking area ratios of fifteen fibers obtained by printing the observation image of the scanning electron microscope (SEM) onto paper (210 mmx297 mm), cutting out a fiber component from the printed paper, measuring the paper piece weight of the cut-out fiber component, then, cutting out an organic binder portion, measuring the paper piece weight of the organic binder portion, and carrying out these operations on fifteen fibers having the same magnification is set to be an organic binder sticking area ratio. In Figs. 2A to 2D, reference numeral 100 denotes a fiber component and reference numeral 101 denotes an organic binder component.

$$\text{An organic binder sticking area ratio (\%) with respect to the surface of the inorganic fiber = (organic binder portion weight (g))/(fiber component weight (g))} \times 100 \quad \text{... Equation (1).}$$

In the measurement of the sticking rate of the organic binder to the surface of the inorganic fiber, a sample (50 mm×50 mm) is cut out from the holding seal material 1 and the weight of the sample is then measured. Thereafter, the sample is heated in an electric furnace for one hour at 600°C, and thus the organic binder is burned and removed. The sample is taken out of the electric furnace and cooled at room temperature, and then, the weight of the sample after heating treatment is measured.

$$\text{An organic binder sticking rate (wt\%) = [(sample weight (g))−(sample weight after heating treatment (g))]/(sample weight (g))} \times 100 \quad \text{... Equation (2).}$$

It is preferable that in addition to the organic binder, as an inorganic binder, alumina or silica be stuck to the holding seal material 1. In addition, it is preferable that the inorganic binder be an inorganic binder in which inorganic particles are dispersed in water as a colloidal solution that is a material form before sticking to the inorganic fiber mat. The inorganic binder applied to the inorganic fiber becomes alumina due to evaporation and removal of moisture by drying, thereby being solidly stuck to the surface of the inorganic fiber and solidly bonding some inorganic fibers together. On the other hand, in a case of using silica sol, it is preferable to use cationic silica sol.

Further, in a case where the inorganic particle is an alumina particle, it is preferable to use an alumina particle in which the shape of a secondary particle in a state of being dispersed in water is a chain shape, as the alumina particle. The alumina particle having a shape of a chain shape is an alumina particle in which a plate-shaped alumina primary particle is continuous in a state of being dispersed in water and a secondary particle (in a range of 200 nm to 900 nm) aggregated to be continued by three-dimensional branching is formed. If a chain-like alumina particle is used, since entanglement of secondary particles is large and uniformity of the thickness of a layer stuck to the surface of the inorganic fiber while the particles are joined to each other increases, the characteristics of the holding seal material are stably exhibited. Further, in a case where a zeta potential of an alumina particle dispersed in a solution has a positive electrical charge and, on the other hand, an alumina fiber or a glass fiber which has a negative electrical charge is used as an inorganic fiber, the alumina particle is solidly stuck to the surface of the inorganic fiber. Similar to a papermaking method to uniformly stick inorganic particles to the surface of an inorganic fiber while performing stirring in slurry, also in an impregnation method to impregnate a mat with an inorganic colloidal solution with a small amount of inorganic particles dispersed therein at low concentration, the inorganic particles are uniformly stuck to the surface of the inorganic fiber. Further, a linear form having an aspect ratio of a fibrous form or a columnar form or an alumina secondary particle aggregated in a feathery shape is also preferable.

It is preferable that needle punching treatment for forming entanglement of the inorganic fibers be carried out on the holding seal material 1.

The needle punching treatment refers to inserting and extracting fiber interlacing means such as a needle into and from a sheet-like material of an inorganic fiber precursor. In the holding seal material 1, inorganic fibers having a relatively long average fiber length are three-dimensionally interlaced by the needle punching treatment. That is, the holding seal material 1 is subjected to the needle punching treatment in a width direction substantially perpendicular to a longitudinal direction, and thus the inorganic fibers are entangled with each other. With respect to the inorganic fiber precursor, description will be made in the description of a method of manufacturing a holding seal material, which will be described later.

By the needle punching treatment, it is possible to moderately reduce the bulk of the holding seal material 1, it is possible to increase work efficiency in canning, and it is possible to increase the surface pressure of the holding seal material 1 due to entanglement of the inorganic fibers. In addition, with respect to the average fiber length of the inorganic fiber, some degree of length is necessary in order to exhibit an interlacing structure. For example, it is preferable that the average fiber length of the inorganic fiber be greater than or equal to 0.5 mm. With respect to the average fiber length, the average value obtained by heating a needle-punched product mat in an electric furnace for one hour at 600°C to remove an organic binder, tearing an intermediate layer of the mat by the fingertips, and measuring the fiber lengths of thirty fibers pulled and collected from the inorganic fibers of the intermediate layer by tweezers is regarded as the average fiber length. If the average fiber length is less than 0.5 mm, entanglement of the fibers is reduced, and thus the tensile strength and the surface pressure of the mat are reduced. Further, it is preferable that the average diameter of the inorganic fibers be in a range of 3 $\mu$m to 10 $\mu$m. If the average diameter is less than 3 $\mu$m, the bending stress of the fiber is reduced, and thus the surface pressure is reduced. On the other hand, if the average diameter exceeds 10 $\mu$m, the surface pressure is reduced over time. When a metal case expands and contracts due to high exhaust gas temperature after assembling of a catalytic converter, load which is applied to a mat put in the gap between the metal case and an exhaust gas treating body changes. If the average diameter exceeds 10 $\mu$m, fibers are easily broken due to the load, and thus surface pressure is reduced.

Next, a method of manufacturing a holding seal material according to an embodiment of the invention will be described. The method of manufacturing a holding seal material according to an embodiment of the invention is suitable for a method of manufacturing the holding seal material according to an embodiment of the invention described above.

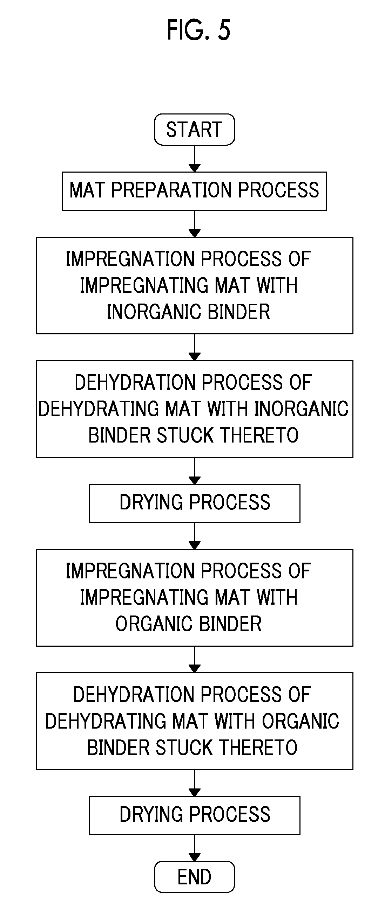

As the method of manufacturing a holding seal material according to this embodiment, there are, for example, two types of process orders. In the case of a holding seal material with an organic binder stuck thereto, the holding seal material is manufactured in the process order shown in Fig. 4 and the manufacturing method thereof is characterized in that it includes a mat preparation process of preparing a mat for a holding seal material made of inorganic fibers with a needle punching treatment carried out thereon, an impregnation process of bringing the mat into contact with an organic binder, thereby impregnating the mat with the organic binder, a dehydration process of dehydrating the mat with the organic binder stuck thereto, and a drying process of allowing moisture stuck to the mat to dry. Further, In the case of a holding seal material with an inorganic binder and an organic binder stuck thereto, the holding seal material is manufactured in the process order shown in Fig. 5 and the manufacturing method thereof includes, after a mat preparation process of preparing a mat for a holding seal material, an impregnation process of bringing the mat into contact with an inorganic binder, thereby impregnating the mat with the inorganic binder, a dehydration process of dehydrating the mat with the inorganic binder stuck thereto, and a drying process of allowing moisture stuck to the mat to dry. Thereafter, the manufacturing method is characterized in that it further includes the combination of an impregnation process of bringing the mat into contact with an organic binder, thereby impregnating the mat with the organic binder, a dehydration process of dehydrating the mat with the organic binder stuck thereto, and a drying process of allowing moisture stuck to the mat to dry.

(a) Mat Preparation Process

In the method of manufacturing a holding seal material according to this embodiment, first, a mat preparation process of preparing a mat for a holding seal material made of inorganic fibers with needle punching treatment carried out thereon is performed. The mat configuring the holding seal material according to this embodiment can be obtained by various methods. However, for example, the mat can be manufactured by the following method. That is, first, an inorganic fiber precursor having an average fiber diameter in a range of 3 $\mu$m to 10 $\mu$m is fabricated by spinning a mixture for spinning using, for example, basic aluminum chloride aqueous solution, silica sol, and the like as a raw material by a blowing method. Subsequently, a continuous sheet-like material having a predetermined size is fabricated by compressing the inorganic fiber precursor, a needle punching treatment is carried out on the sheet-like material, and thereafter, firing treatment is carried out, whereby the preparation of the mat for a holding seal material is completed.

(b) Impregnation Process (Inorganic Binder)

Next, an impregnation process of bringing the mat into contact with an inorganic binder which includes inorganic particles and water, thereby impregnating the mat with the inorganic binder, is performed. As the inorganic binder, alumina, silica, titania, colloidal solutions in which they are dispersed in water, or the like can be used. However, since in a commercially available stock solution, there is a case where concentration is too high, it is preferable that a solution in which concentration of inorganic particles is diluted so as to be in a range of about 0.5 wt% to 5 wt% in terms of solid content be used as the inorganic binder. In this impregnation process, a method of bringing the mat into contact with an inorganic binder which includes inorganic particles and water is not particularly limited. For example, the mat may be impregnated with an inorganic binder by immersing the mat in an inorganic binder which includes inorganic particles and water, and the mat may also be impregnated with an inorganic binder by dropping an inorganic binder which includes inorganic particles and water onto the mat with a method such as a curtain coating method. Further, in a case of using alumina as the inorganic binder, it is preferable to use a colloidal solution which includes alumina particles in which the shape of a secondary particle in the solution is a chain shape (for example, Alumina sol 550 manufactured by Nissan Chemical Industries, Ltd.).

(c) Dehydration Process (Inorganic Binder)

Next, dehydration treatment is performed on the mat with the inorganic binder stuck thereto. In this process, the sticking amount of the inorganic binder can be roughly adjusted by suctioning and dehydrating the mat with the inorganic binder stuck thereto.

(d) Impregnation Process (Organic Binder)

Next, an impregnation process of bringing the mat into contact with an organic binder which includes water, thereby impregnating the mat with the organic binder, is performed. As the organic binder, emulsion prepared by dispersing acrylate-based latex, rubber-based latex, or the like in water can be used. However, since in a commercially available stock solution, there is a case where concentration is too high, it is preferable that a solution in which concentration of organic solids is diluted so as to be in a range of about 0.1 wt% to 3 wt% in terms of solid content be used as the organic binder. In this impregnation process, a method of bringing the mat into contact with an organic binder which includes water is not particularly limited. For example, the mat may be impregnated with an organic binder by immersing the mat in an organic binder which includes water, and the mat may also be impregnated with an organic binder by dropping an organic binder which includes water onto the mat with a method such as a curtain coating method.

(e) Dehydration Process (Organic Binder)

Next, dehydration treatment is performed on the mat with the organic binder stuck thereto. In this process, the sticking amount of the organic binder can be roughly adjusted by suctioning and dehydrating the mat with the organic binder stuck thereto.

(f) Drying Process

Thereafter, a drying process of drying the mat which includes the binders at a temperature in a range of about 100°C to 150°C is performed, whereby the mat with moisture evaporated and the binders stuck thereto is obtained.
It is preferable that wind speed in heating hot-air drying be in a range of 1.5 m/s to 2.5 m/s. At the time of the heating hot-air drying, it is preferable that in a state where the mat is pinched from above and below by plates having vents and excessive load is not applied to the mat, hot air is blown toward the side of the principal surface on the other side from the side of the principal surface (preferably, the second principal surface) on one side of the mat to ventilate the mat from the vents.
The mat subjected to the processes to this point becomes the holding seal material according to this embodiment. Further, in order to make the holding seal material having a shape provided with a convex portion and a concave portion as shown in Fig. 1, cutting treatment of cutting the holding seal material into a predetermined shape may be further performed.

(Exhaust Gas Purifying Device)

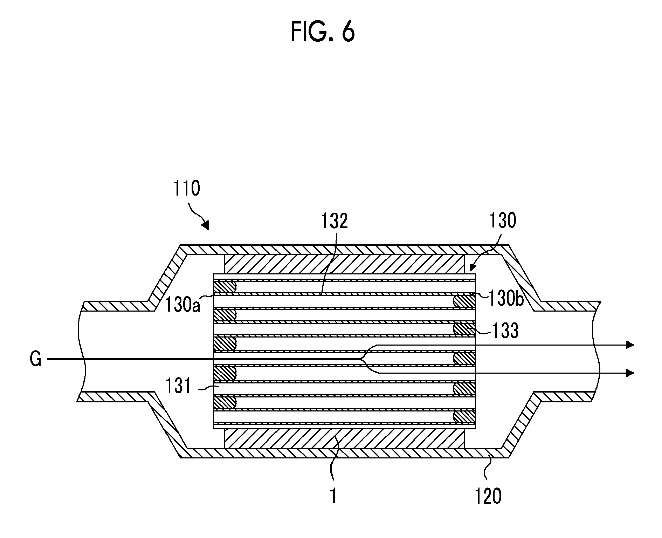

The holding seal material according to an embodiment of the invention is used as a holding seal material of an exhaust gas purifying device. Hereinafter, an exhaust gas purifying device according to an embodiment of the invention will be described. Fig. 6 is a cross-sectional view schematically showing an example of the exhaust gas purifying device according to an embodiment of the invention. As shown in Fig. 6, an exhaust gas purifying device 110 according to an embodiment of the invention is provided with a casing 120, an exhaust gas treating body 130 accommodated in the casing 120, and the holding seal material 1 disposed between the exhaust gas treating body 130 and the casing 120. The exhaust gas treating body 130 is a columnar body in which a large number of cells 131 are longitudinally provided in parallel across a cell wall 132. In addition, an introduction pipe for introducing exhaust gas discharged from an internal combustion engine and a discharge pipe for discharging the exhaust gas passed through the exhaust gas purifying device to the outside are connected to end portions of the casing 120, as necessary.
In addition, in the exhaust gas purifying device 110 shown in Fig. 6, as the exhaust gas treating body 130, an exhaust gas filter (a honeycomb filter) in which one side in each cell is sealed by a sealant 133 is used. However, a catalyst carrier in which sealing by a sealant is not made at any end face may be used.
In the exhaust gas purifying device 110 shown in Fig. 6, as the holding seal material, the holding seal material 1 shown in Fig. 1 is used. It is preferable that the holding seal material 1 be disposed such that the first principal surface 11 is on the casing side and the second principal surface 12 is on the exhaust gas treating body side. This is because since the vicinity of the second principal surface of the holding seal material is relatively soft and thus easily bent, it is preferable that the second principal surface be disposed on the side of the exhaust gas treating body which is bent at a sharp angle.

A case where exhaust gas passes through the exhaust gas purifying device 110 having the configuration described above will be described below with reference to Fig. 6. As shown in Fig. 6, exhaust gas (in Fig. 6, exhaust gas is denoted by G and the flow of the exhaust gas is shown by an arrow) discharged from an internal combustion engine and flowed into the exhaust gas purifying device 110 flows into one cell 131 opened at an exhaust gas inflow side end face 130a of the exhaust gas treating body (the honeycomb filter) 130 and passes through the cell wall 132 separating the cells 131. At this time, particulate matter (PM) in the exhaust gas is collected in the cell wall 132, and thus the exhaust gas is purified. The purified exhaust gas flows out from another cell 131 opened at an exhaust gas outflow side end face 130b and is discharged to the outside.

Next, the exhaust gas treating body (the honeycomb filter) and the casing configuring the exhaust gas purifying device according to an embodiment of the invention will be described. In addition, with respect to the configuration of the holding seal material configuring the exhaust gas purifying device, since it was already described as the holding seal material according to an embodiment of the invention, description is omitted.

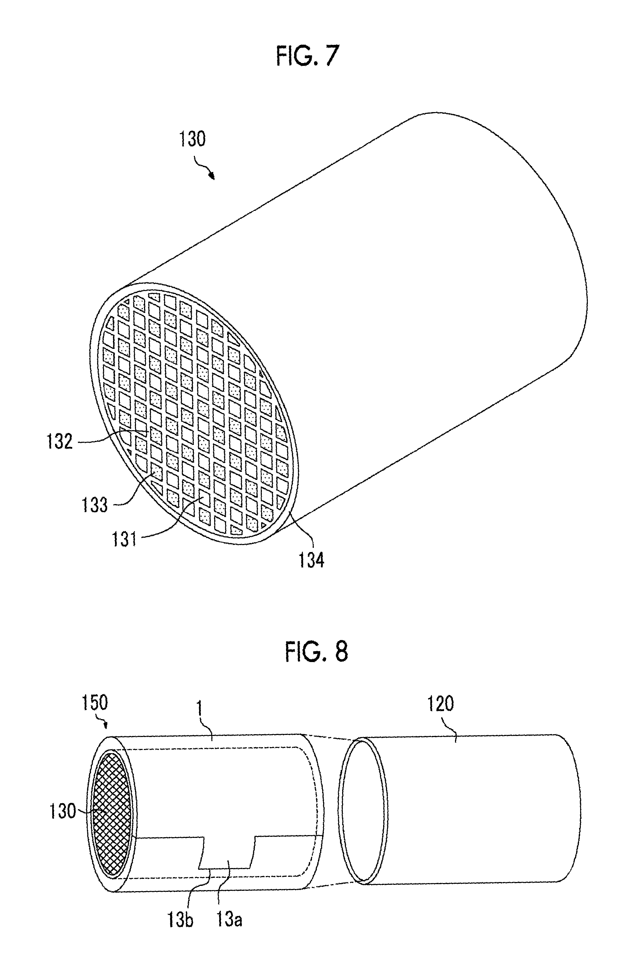

First, the exhaust gas treating body configuring the exhaust gas purifying device will be described. Fig. 7 is a perspective view schematically showing an example of the exhaust gas treating body configuring the exhaust gas purifying device according to a first embodiment of the invention. As shown in Fig. 7, the exhaust gas treating body (the honeycomb filter) 130 is mainly made of porous ceramics and the shape thereof is a substantially columnar shape. Further, an outer peripheral coat layer 134 is provided on the outer periphery of the honeycomb filter 130 for the purpose of reinforcing an outer peripheral portion of the honeycomb filter 130, fixing the shape, or improving thermal insulation properties of the honeycomb filter 130. In addition, the configuration of the inside of the honeycomb filter 130 is as already described in the description of the exhaust gas purifying device according to the first embodiment of the invention described above (refer to Fig. 6).

Next, the casing configuring the exhaust gas purifying device will be described. The casing 120 is mainly made of metal such as stainless steel and the shape thereof may be a substantially cylindrical shape in which the inner diameters of both end portions are smaller than the inner diameter of the central portion, as shown in Fig. 6, and may also be a substantially cylindrical shape having a constant inner diameter. It is preferable that the inner diameter (the inner diameter of a portion accommodating the exhaust gas treating body) of the casing be slightly shorter than the combined length of the diameter of the end face of the exhaust gas treating body and the thickness of the holding seal material in a state of being wrapped around the exhaust gas treating body.

Subsequently, a method of manufacturing the exhaust gas purifying device according to the first embodiment of the invention will be described. Fig. 8 is a perspective view schematically showing an example of the method of manufacturing the exhaust gas purifying device according to the first embodiment of the invention. In Fig. 8, an example in which a substantially cylindrical casing having a constant inner diameter is used is shown.

First, a wrapping process of fabricating a wrapped body (an exhaust gas treating body around which a holding seal material is wrapped) 150 by wrapping the holding seal material 1 shown in Fig. 1 around the exhaust gas treating body (the honeycomb filter) 130 is performed. In the wrapping process, the holding seal material 1 is wrapped around the outer periphery of the substantially cylindrical exhaust gas treating body 130 fabricated by a conventionally known method such that the convex portion 13a and the concave portion 13b are fitted to each other. In the wrapping process, it is preferable to perform wrapping such that the second principal surface 12 of the holding seal material 1 comes into contact with the outer periphery of the exhaust gas treating body 130. As a result, the wrapped body 150 that is the exhaust gas treating body 130 around which the holding seal material 1 is wrapped can be fabricated.

Next, an accommodation process of making the fabricated wrapped body 150 be accommodated in the casing 120 having a substantially cylindrical shape of a predetermined size and mainly made of metal or the like is performed. In order for the holding seal material to be compressed and thus exert a predetermined repulsive force (that is, a force of holding the exhaust gas treating body) after the accommodation, the inner diameter of the casing 120 is made slightly smaller than the outermost diameter including the thickness of the holding seal material 1 of the exhaust gas treating body 130 around which the holding seal material 1 is wrapped. By the above method, the exhaust gas purifying device 110 shown in Fig. 6 can be manufactured.

With regard to the accommodation process, as a method of making the wrapped body be accommodated in the casing, for example, a press-fitting method (a stuffing method) of press-fitting the wrapped body to a predetermined position of the inside of the casing, a sizing method (a swaging method) in which the wrapped body is inserted into the casing and the casing is then compressed from the outer periphery side so as to reduce the inner diameter of the casing, a clamshell method in which the casing is made in a shape capable of being divided into two components, a first casing and a second casing and the wrapped body is placed on the first casing and then covered and sealed with the second casing, or the like can be given.

The operation and effects of the holding seal material according to an embodiment of the invention, the method of manufacturing the holding seal material, and the exhaust gas purifying device are enumerated below.

(1) In the holding seal material according to this embodiment, the holding seal material is characterized in that affixing is performed in which at least a portion of the surface of the inorganic fiber is not covered with the organic binder. A frictional force between the fibers is not reduced due to existence of the portion where the organic binder is not interposed in the fiber intersection portion, while the amount of scattered fibers at the time of work of wrapping the holding seal material around the exhaust gas purifying device (the honeycomb filter) is suppressed.

(2) Preferably, the holding seal material is characterized in that the organic binder is stuck to the surface of the inorganic fiber in an island form. In such a sticking state, it is possible to increase the portion where the organic binder is not interposed in the fiber intersection portion and a frictional force between the fibers is not reduced. In the sticking state of the organic binder which is stuck to the inorganic fiber, the organic binder is stuck to the surface of the inorganic fiber in a state of being dotted and stuck in a substantially circular shape or an elliptical shape. (The island form refers to that the surface of the inorganic fiber is likened to the surface of the sea and an organic binder sticking surface is likened to an island).

(3) More preferably, the holding seal material is characterized in that the organic binder is affixed at a ratio in a range of 10% to 80% with respect to the area of the surface of the inorganic fiber. In the sticking state of the organic binder which is stuck to the inorganic fiber, the number of places where the organic binder is interposed in the fiber intersection portion changes according to the area of the organic binder which is stuck to the surface of the inorganic fiber. For this reason, a frictional force between the fibers is not reduced.

(4) In the holding seal material according to this embodiment, the holding seal material is characterized in that the affixing amount of the organic binder is in a range of 0.1 wt% to 1.5 wt% with respect to fiber weight, the glass transition temperature thereof is less than or equal to -21°C, and the average particle diameter of polymer resin dispersed in water as emulsion that is a material form before the organic binder is stuck to an inorganic fiber mat is greater than or equal to 320 nm. The organic binder affixed to the seal material, in which the glass transition temperature thereof is less than or equal to -21°C, can show a rubber state having high mobility at normal temperature. Therefore, when assembling the holding seal material to the catalyst carrier and a shell, the organic binder joins the inorganic fibers of a mat-like material together, shows excellent extensibility, and can absorb damage such as impact which is applied to the holding seal material. Further, the glass transition temperature is very low, whereby it is possible to reduce an affixing rate of the organic binder to a fiber scattering amount suppression level of the minimum necessary, that is, to a range of 0.2 wt% to 1.5 wt% with respect to fiber weight. Then, as the organic binder which easily forms the portion where the organic binder is stuck and the portion where the organic binder is not stuck, on the surface of the inorganic fiber, it is preferable to use an organic binder in which the average particle diameter of polymer resin dispersed in water as emulsion that is a material form before sticking to the inorganic fiber mat be greater than or equal to 320 nm.

(5) In the holding seal material according to this embodiment, in addition to the organic binder, inorganic particles may be added, and it is preferable that a sticking rate of the inorganic bonder in the entirety of the holding seal material be in a range of 0.3 wt% to 4.0 wt%. If the sticking amount of the inorganic particles is less than 0.3 wt% in the entirety of the holding seal material, an increase in frictional force occurring between fiber intersections is small, that is, the effect of improving a holding force is small. Further, if the sticking amount of the inorganic particles exceeds 4.0 wt% in the entirety of the holding seal material, there is a case where the holding seal material is hardened and thus is not easily bent.

(6) The holding seal material according to this embodiment is a holding seal material obtained from a mat made of inorganic fibers on which needle punching treatment is carried out. By performing the needle punching treatment, it is possible to entangle the fibers, thereby moderately reducing the bulk of the holding seal material, it is possible to increase work efficiency in canning, and it is possible to increase the surface pressure of the holding seal material due to entanglement of the inorganic fibers.

(7) In the method of manufacturing a holding seal material according to this embodiment, it is possible to manufacture a holding seal material through the combination of a mat preparation process, an impregnation process, a dehydration process, and a drying process.

(8) In the method of manufacturing a holding seal material according to this embodiment, the inorganic binder is an alumina particle, and the shape of a secondary particle of the alumina particle in the inorganic binder is a chain shape. If the chain-like alumina particle is used, since entanglement of the secondary particles is large and the particles are stuck to the surface of the inorganic fiber while being joined to each other, it is possible to increase uniformity of the thickness of the inorganic binder. For this reason, the characteristics of the holding seal material are stably exhibited.

(9) The exhaust gas purifying device according to this embodiment is an exhaust gas purifying device which includes an exhaust gas treating body, a metal casing accommodating the exhaust gas treating body, and a holding seal material that is disposed between the exhaust gas treating body and the metal casing and holds the exhaust gas treating body, wherein the holding seal material is the holding seal material according to this embodiment. If the holding seal material according to this embodiment is used as the holding seal material, the holding seal material is wrapped around the exhaust gas treating body in a state where there are no wrinkles or cracks in the wrapping, and an exhaust gas purifying device can be made in which the exhaust gas treating body is held with a high holding force.

[Examples]

Hereinafter, examples more specifically disclosing an embodiment of the invention are shown. In addition, the invention is not limited to only these examples.

(Example 1)

(a) Mat Preparation Process

First, a mat for a holding seal material was prepared by the following procedure.

(a-1) Spinning Process

A liquid mixture was prepared by combining silica sol with a basic aluminum chloride aqueous solution prepared such that an Al content is 70 g/l and a relationship of Al: Cl=1:1.8 (atom ratio) is satisfied, such that a composition ratio in an inorganic fiber after firing has a relationship of $Al_2O_3$: $SiO_2$=72:28 (ratio by weight), and adding a moderate amount of organic polymer (polyvinyl alcohol). An inorganic fiber precursor in which an average fiber diameter after firing is 5.1 $\mu$m was fabricated by obtaining a mixture for spinning by concentrating the obtained liquid mixture, and spinning the mixture for spinning by a blowing method.

(a-2) Compression Process

A continuous sheet-like material was fabricated by compressing the inorganic fiber precursor obtained in the above process.

(a-3) Needle Punching Process

A needle punching treated body was fabricated by continuously performing needle punching treatment on the sheet-like material obtained in the above process by using the conditions shown below. First, a needle board with needles mounted thereon at a density of 21 pieces/cm$^2$ was prepared. Next, the needle punching treated body was fabricated by performing needle punching treatment by disposing the needle board above the surface on one side of the sheet-like material and moving the needle board up and down once along a thickness direction of the sheet-like material. At this time, the needle penetrated the sheet-like material until a barb formed at a tip portion of the needle completely penetrates out of the surface on the opposite side of the sheet-like material.

(a-4) Firing Process

A fired sheet-like material made of inorganic fibers which include alumina and silica at a ratio of 72 parts by weight:28 parts by weight was fabricated by continuously firing the needle punching treated body obtained in the above process at the maximum temperature that is 1250°C. The average fiber diameter of the inorganic fibers was 5.1 $\mu$m and the minimum value of the inorganic fibers diameter was 3.2 $\mu$m. The inorganic fibers obtained in this way had a bulk density of 0.15 g/cm$^3$ and weight per unit area of 1500 g/m$^2$.

(a-5) Cutting Process

A cut sheet-like material (a mat) was prepared by cutting the fired sheet-like material obtained in the above process.

(b) Impregnation Process

An inorganic binder which includes inorganic particles and water was prepared by diluting a colloidal solution of commercially available alumina (Alumina sol 550 (solid content concentration: 15 wt%) manufactured by Nissan Chemical Industries, Ltd.) with water so as to obtain a solid content concentration of 1 wt%. A mat was impregnated with the inorganic binder by bringing the inorganic binder into contact with the mat by a curtain coating method.

(c) Dehydration Process

Adjustment was performed such that a state is created where the inorganic binder is stuck by 100 wt% with respect to 100 wt% of inorganic fiber weight, by suctioning and dehydrating the mat with the inorganic binder stuck thereto by a dehydrator. Since the solid content concentration of the inorganic particles in the inorganic binder is 1 wt%, the sticking amount of the inorganic particles per unit weight of the inorganic fiber becomes 1.0 g/100 g in terms of solid content.

(d) Drying Process

Next, a mat with the inorganic particles stuck thereto was obtained by performing heating hot-air drying on the mat with the inorganic binder stuck thereto at a temperature of 130°C and wind speed of 2 m/s. In the drying process, in a state of pinching the mat from above and below by plates having vents and being made such that excessive load is not applied to the mat, hot air was blown toward the side of the principal surface (a surface that is the first principal surface) on the other side from the side of the principal surface (a surface that is the second principal surface) on one side of the mat to ventilate the mat from the vents.

(e) Impregnation Process

Concentration adjustment was performed on the dried mat by diluting an organic binder (acrylate-based latex, glass transition temperature Tg=-31°C, average particle diameter: 400 nm) with water so as to obtain a solid content concentration of 0.3 wt%. The mat was impregnated with the organic binder by bringing the organic binder into contact with the mat by curtain coating method.

(f) Dehydration Process

Adjustment was performed such that a state is created where the organic binder (acrylate-based latex) subjected to concentration adjustment is stuck by 100 wt% with respect to 100 wt% of inorganic fiber weight, by suctioning and dehydrating the mat with the organic binder stuck thereto by a dehydrator. Since the concentration of polymer resin in the organic binder (acrylate-based latex) is 0.3 wt%, the sticking amount of an organic component per unit weight of the inorganic fiber becomes 0.3 g/100 g in terms of solid content.

(g) Drying Process

Next, the mat with the organic binder stuck thereto was dried by heating hot-air drying at a temperature of 130°C and wind speed of 2 m/s. In the drying process, in a state of pinching the mat from above and below by plates having vents and being made such that excessive load is not applied to the mat, hot air was blown toward the side of the principal surface (a surface that is the first principal surface) on the other side from the side of the principal surface (a surface that is the second principal surface) on one side of the mat to ventilate the mat from the vents.

(h) Cutting Treatment

The manufacturing of a holding seal material was completed by cutting the mat obtained in this way such that a dimension in a plan view is a full length at 400 mmxwidth 120 mm, a convex portion having a length L of 40 mm and a width W of 40 mm is formed at one end, and a concave portion fitting to the convex portion is formed at the other end.

(Example 2)

A holding seal material was fabricated in the same way as that in Example 1 with the exception that the impregnation process and the dehydration process for the inorganic binder are eliminated and the average particle diameter of the polymer resin of the organic binder (acrylate-based latex) is changed to 800 nm.

(Comparative Example 1)

In an organic binder impregnation process, concentration adjustment was performed by diluting an organic binder (acrylate-based latex, glass transition temperature Tg=-31°C, average particle diameter: 200 nm) with water so as to obtain a solid content concentration of 1.8 wt%. Further, in a dehydration process, adjustment was performed such that a state is created where an organic binder solution is stuck by 100 wt% with respect to 100 wt% of inorganic fiber weight, by suctioning and dehydrating a mat with the organic binder stuck thereto by a dehydrator. A holding seal material was fabricated in the same way as that in Example 1 with the exception that since the solid content concentration of an organic component in the organic binder (acrylate-based latex) subjected to the concentration adjustment is 1.8 wt%, the sticking amount of the organic component per unit weight of the inorganic fiber is changed to become 1.8 g/100 g in terms of solid content.

(Comparative Example 2)

A holding seal material was fabricated in the same way as that in Example 1 with the exception that the average particle diameter of polymer resin of the organic binder (acrylate-based latex) is changed to 100 nm.
The following evaluations were performed on the holding seal material fabricated in each of the examples and the comparative examples.

(Organic Binder Sticking State Observation)

A sticking state of the organic binder of the holding seal material according to the invention was observed and evaluated by the SEM (scanning electron microscope). A fiber of an intermediate layer of the mat was extracted and the state of the surface of the fiber was observed.

(Surface Pressure Evaluation Test)

With respect to the holding seal material obtained in each of the examples and the comparative examples, surface pressure was measured by the following method. In addition, a hot surface pressure measuring device with a heating heater provided at the portion of a plate compressing the mat was used for the measurement of the surface pressure. First, in a room temperature state, a sample was compressed until the bulk density (GBD) of the sample become 0.3 g/cm$^3$ and maintained for ten minutes. In addition, the bulk density of the sample is a value which is obtained by an equation, "bulk density=weight of sample/(area of sample×thickness of sample)". Next, the bulk density was opened to 0.273 g/cm$^3$ while raising the temperature to one side to 900°C and one side to 650°C at a rate of 40°C/min in a state where the sample was compressed. Then, the sample was maintained for five minutes in the states of one side being 900°C and one side being 650°C and the bulk density of 0.273 g/cm$^3$. Thereafter, the sample was compressed at a rate of 1 inch (25.4 mm)/min until the bulk density becomes 0.3 g/cm$^3$, and load at that time was measured. Surface pressure (kPa) was obtained by dividing the obtained load by the area of the sample.

(Fiber Scattering Test)

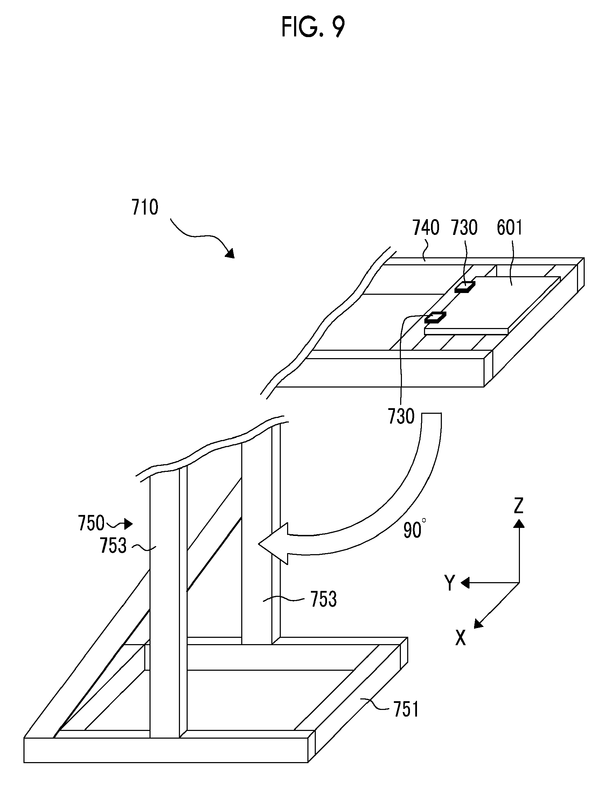

A fiber scattering test was performed using a fiber scattering tester shown in Fig. 9. A sample 601 (100 mm×100 mm) punched out from a holding seal material is fixed to a leading end of an arm frame 740 (full length: 915 mm, width: 322 mm) protruding from a tester 710. The arm frame 740 is connected to a vertical frame 750 of the tester 710 at a leading end on the other side. The vertical frame 750 is installed on a base frame section 751 so as to be erect. Further, the vertical frame 750 has a principal plane (height in a Z direction (except for the height of the base frame section 751) 1016 mm×length in an X direction 322 mm) extending in an X-Z plane. The width in the X direction of two metal columns 753 configuring the vertical frame 750 is 25 mm and the width in a Y direction is 25 mm. The arm frame 740 can rotate on a plane (a Y-Z plane) perpendicular to the principal plane of the vertical frame with a leading end portion connected to an upper end (not shown) of the vertical frame 750 as a fulcrum. The rotation can be performed in at least an angular range of less than or equal to 90° with respect to the principal plane of the vertical frame from the principal plane. At the time of the test, if the arm frame 740 is dropped from a state of being maintained at an angle of 90° (that is, in a horizontal state) with respect to a vertical direction, the arm frame 740 rotates 90° in a direction of an arrow along the Y-Z plane and in accordance with this, the sample 601 also rotates in the direction of an arrow. The arm frame 740 finally collides with the metal columns 753 of the vertical frame 750. Due to impact at this time, some of the inorganic fibers scatter from the sample 601. After the test, the sample 601 is gently removed from a clip 730. Thereafter, the scattering rate of the inorganic fibers was obtained using the following equation.
Scattering rate (wt%) of inorganic fiber=[(weight (g) of sample before test)-(weight (g) of sample after test)]/(weight (g) of sample before test)×100 ... Equation (3)

The characteristics and the evaluation results of the holding seal material of each of the examples and the comparative examples are collectively shown in a table. In columns of "decision" in the table, a holding force when holding the exhaust gas treating body and a fiber scattering property when wrapping the holding seal material around the exhaust gas treating body are evaluated from the evaluation results of the surface pressure of the holding seal material and the fiber scattering property and a case of passing is shown by O and a case of rejection is shown by X.

[Table 1]

|  | Sticking amount of inorganic binder (wt%) | Sticking amount of organic binder (wt%) | Average particle diamet er of organic binder (nm) | Organic binder sticking state | Surface pressure after 1000 cycles | | Fiber scattering | |
|---|---|---|---|---|---|---|---|---|
|  |  |  |  |  | Surface pressure (kPa) | Decision | Fiber scattering rate (wt%) | Decision |
| Example 1 | 1 | 0.3 | 400 | Island form | 36.2 | O | 0.071 | O |
| Example 2 | 0 | 0.3 | 800 | Island form | 31.4 | O | 0.053 | O |
| Comparative Example 1 | 0 | 1 | 400 | Coating | 23.6 | X | 0.047 | O |
| Comparative Example 2 | 1 | 0.3 | 100 | Coating | 27.3 | X | 0.051 | O |

In the holding seal materials fabricated in Examples 1 and 2, the amount of scattered fibers is less than or equal to 0.08% and is low and good, the surface pressure value is also greater than or equal to 30.0 kPa and is large and good, and thus both characteristics can be satisfied. In particular, in the holding seal material fabricated in Example 1, due to the use of an inorganic binder, the surface pressure value was the largest and good.

In the holding seal material fabricated in Comparative Example 1, the amount of scattered fibers is less than or equal to 0.08% and is low and good. However, the surface pressure did not satisfy 30.0 kPa and thus was a low and undesirable result. In the holding seal material fabricated in Comparative Example 2, the amount of scattered fibers is less than or equal to 0.08% and is low and good. However, the surface pressure did not satisfy 30.0 kPa and thus was a low and undesirable result. In the holding seal materials fabricated in Comparative Examples 1 and 2, a result in which both the characteristics of a reduction in the amount of scattered fibers and a large surface pressure value cannot be satisfied was obtained.

[Description of Reference Numerals and Signs]

1: holding seal material
11: first principal surface
12: second principal surface
13a: convex portion
13b: concave portion
100: inorganic fiber
101: organic binder
110: exhaust gas purifying device
120: casing
130: exhaust gas treating body
150: wrapped body
710: fiber scattering tester

**Claims**

1. A holding seal material made of inorganic fibers and containing an organic binder, wherein the organic binder is stuck to a surface of the inorganic fiber in a plurality of island forms.

2. The holding seal material according to Claim 1, wherein the organic binder is stuck at an area ratio in a range of 10% to 80% with respect to the area of the surface of the inorganic fiber.

3. The holding seal material according to Claim 1 or 2, wherein a sticking rate of the organic binder is in a range of 0.1 wt% to 1.5 wt% with respect to the weight of the fiber configuring the holding seal material.

4. The holding seal material according to any one of Claims 1 to 3, wherein a glass transition temperature of the organic binder is less than or equal to -21°C and an average particle diameter in a latex aqueous solution of the organic binder is greater than or equal to 320 nm.

5. The holding seal material according to any one of Claims 1 to 4, wherein the holding seal material is made of inorganic fibers which are inorganic fibers that are obtained by a precursor method and are obtained by carrying out needle punching treatment on the precursor inorganic fibers and then performing firing.

6. The holding seal material according to any one of Claims 1 to 5, wherein the inorganic fiber is made of at least one type which is selected from the group consisting of an alumina fiber, a silica fiber, an alumina silica fiber, a mullite fiber, a glass fiber, and a bio-soluble fiber.

7. The holding seal material according to any one of Claims 1 to 5, wherein the inorganic fiber is a mixture of alumina and silica.

8. The holding seal material according to any one of Claims 1 to 7, wherein inorganic particles are stuck to the surface of the inorganic fiber.

9. The holding seal material according to any one of Claims 1 to 7, wherein inorganic particles are stuck to the surface of the inorganic fiber and an organic binder is stuck to the surfaces of the inorganic particles.

10. An exhaust gas purifying device comprising:

    an exhaust gas treating body;
    a metal casing which accommodates the exhaust gas treating body; and
    a holding seal material which is disposed between the exhaust gas treating body and the metal casing and holds the exhaust gas treating body,
    wherein the holding seal material is the holding seal material according to any one of Claims 1 to 9.

11. A method of manufacturing the holding seal material according to Claim 9, comprising:

    a process of bringing an inorganic binder which includes inorganic particles and water into contact with a mat made of inorganic fibers;
    a drying process of drying the mat;
    a process of bringing an organic binder into contact with the mat; and
    a drying process of drying the mat.

# FIG. 1

## FIG. 2A

100          101

## FIG. 2B

100          101

## FIG. 2C

100          101

## FIG. 2D

100          101

## FIG. 3

## FIG. 4

START

MAT PREPARATION PROCESS

IMPREGNATION PROCESS OF
IMPREGNATING MAT WITH
ORGANIC BINDER

DEHYDRATION PROCESS OF
DEHYDRATING MAT WITH ORGANIC
BINDER STUCK THERETO

DRYING PROCESS

END

FIG. 5

START

↓

MAT PREPARATION PROCESS

↓

IMPREGNATION PROCESS OF
IMPREGNATING MAT WITH
INORGANIC BINDER

↓

DEHYDRATION PROCESS OF
DEHYDRATING MAT WITH INORGANIC
BINDER STUCK THERETO

↓

DRYING PROCESS

↓

IMPREGNATION PROCESS OF
IMPREGNATING MAT WITH
ORGANIC BINDER

↓

DEHYDRATION PROCESS OF
DEHYDRATING MAT WITH ORGANIC
BINDER STUCK THERETO

↓

DRYING PROCESS

↓

END

# FIG. 6

## FIG. 7

## FIG. 8

# FIG. 9

Europäisches
Patentamt

European
Patent Office

Office européen
des brevets

**EUROPEAN SEARCH REPORT**

Application Number

EP 13 19 1811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/019394 A1 (UNIFRAX I LLC [US]; KUMAR AMIT [US]; FERNANDES JR SERGIO DAVID [US]) 17 February 2011 (2011-02-17)<br>* page 13, lines 1-7; figures 1,9 *<br>* page 24, lines 30-31 *<br>* page 29, lines 22-27 *<br>* page 30, lines 13-31 *<br>* page 31, lines 19-22 *<br>* page 33, lines 6-10 *<br>----- | 1-11 | INV.<br>F01N3/021 |
| A | EP 1 952 871 A1 (IBIDEN CO LTD [JP]) 6 August 2008 (2008-08-06)<br>* paragraphs [0013], [0023], [0026], [0140] - [0142], [0156] - [0159]; figures 9,10 *<br>----- | 1-11 | |
| A | WO 2006/020058 A1 (3M INNOVATIVE PROPERTIES CO [US]; SAKO KENJI [JP]) 23 February 2006 (2006-02-23)<br>* page 12, line 15 - page 13, line 11; figures 1,2,5 *<br>----- | 1-11 | |

TECHNICAL FIELDS
SEARCHED (IPC)

F01N

The present search report has been drawn up for all claims

| Place of search | Date of completion of the search | Examiner |
|---|---|---|
| Munich | 22 January 2014 | Kolland, Ulrich |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.....................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 19 1811

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2014

| Patent document cited in search report | | Publication date | Patent family member(s) | | Publication date |
|---|---|---|---|---|---|
| WO 2011019394 | A1 | 17-02-2011 | CN | 102686843 A | 19-09-2012 |
| | | | EP | 2464838 A1 | 20-06-2012 |
| | | | US | 2011023430 A1 | 03-02-2011 |
| | | | WO | 2011019394 A1 | 17-02-2011 |
| EP 1952871 | A1 | 06-08-2008 | CN | 1795038 A | 28-06-2006 |
| | | | CN | 101249349 A | 27-08-2008 |
| | | | CN | 101249350 A | 27-08-2008 |
| | | | EP | 1743685 A1 | 17-01-2007 |
| | | | EP | 1930058 A2 | 11-06-2008 |
| | | | EP | 1952871 A1 | 06-08-2008 |
| | | | JP | 4592695 B2 | 01-12-2010 |
| | | | KR | 20060056277 A | 24-05-2006 |
| | | | US | 2005272602 A1 | 08-12-2005 |
| | | | US | 2009004431 A1 | 01-01-2009 |
| | | | WO | 2005110578 A1 | 24-11-2005 |
| WO 2006020058 | A1 | 23-02-2006 | AT | 494463 T | 15-01-2011 |
| | | | BR | PI0513381 A | 06-05-2008 |
| | | | CA | 2573804 A1 | 23-02-2006 |
| | | | CN | 101023247 A | 22-08-2007 |
| | | | EP | 1784560 A1 | 16-05-2007 |
| | | | JP | 5133685 B2 | 30-01-2013 |
| | | | JP | 5357311 B2 | 04-12-2013 |
| | | | JP | 2008506886 A | 06-03-2008 |
| | | | JP | 2012215179 A | 08-11-2012 |
| | | | KR | 20070029290 A | 13-03-2007 |
| | | | KR | 20130051026 A | 16-05-2013 |
| | | | US | 2008175764 A1 | 24-07-2008 |
| | | | WO | 2006020058 A1 | 23-02-2006 |
| | | | ZA | 200701328 A | 27-08-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006342774 A